# EUROPEAN PATENT APPLICATION

(11) **EP 1 705 938 A1**
(43) Date of publication of application: **27.09.2006**
(21) Application number: 05006547.3
(22) Date of filing: 24.03.2005
(51) Int. Cl.: H04Q 7/38, H04M 1/725

(54) **Security system**

(71) Applicant: Harman Becker Automotive Systems GmbH, 76307 Karlsbad (DE)
(72) Inventor: Hovestadt, Guido, 58739 Wickede-Ruhr (DE)
(74) Representative: Bertsch, Florian Oliver

(57) **Abstract**

Mobile communication unit (100) having at least one operating mode comprising an enabling/disabling unit (110) for enabling/disabling at least one operating mode, whereas the enabling/disabling unit (110) is designed in such a way that at least one operating mode is temporarily disabled for the user of the mobile communication system.

## Description

This invention relates to a mobile communication unit, to a check point for controlling the operating mode of the mobile communication unit, to a security system comprising the check point and the mobile communication unit, and to a method for controlling the operating mode of the mobile communication unit.

### RELATED ART

There are various different types of communication units which can be used for an increasing number of purposes. These communication units are electronic devices comprising more and more often different features for different kinds of applications. By way of example, cellular phones often comprise a camera for taking pictures. Other electronic devices may comprise a voice recorder for recording speech data. Additionally, many of these devices also comprise a telecommunication module which can be used for transmitting the recorded data to anywhere in the world using telecommunication networks such as cellular telecommunication systems.

Additionally, areas are known in which communication units having photo or video capabilities are prohibited, as in those areas visitors of that area could have access to information the visitor is not supposed to have. This information can furthermore be recorded and transmitted all over the world using the communication unit and the telecommunication features of the communication unit. By way of example, the use of mobile phones in predetermined areas such as premises of a company where a visiting person could get access to classified information he or she is not supposed to record is prohibited. As a consequence more and more often it is prohibited to take along such a mobile communication unit in some areas. For the user of the mobile communication unit this means, that the user is not allowed to use or to take along the mobile communication unit. Often the user has to hand over the mobile communication unit before entering a restricted area. In this case the user cannot be reached by third persons by the mobile communication unit or the user cannot use other operating modes of the communication unit not prohibited in the area, when the user has to leave the communication at the entrance of the area.

Therefore, a need exists for providing a possibility with which the disabling of predetermined operating modes of the communication unit becomes possible in such a way that the user alone is not able to enable the operating mode again without the permission of a supervising agent. If this were the case, the user would not have to deposit the mobile communication unit before entering a predetermined area. In this case the user can still use the other operating modes of the communication unit which were not disabled by the supervising authority.

### SUMMARY OF THE INVENTION

This need is met by a mobile communication unit, a check point, a security system comprising a mobile communication unit in the check point and by a method as mentioned in the independent claims. In the dependent claims preferred embodiments of the invention are described.

In a first embodiment this need is met by a mobile communication unit having at least one operating mode comprising an enabling/ disabling unit for enabling/ disabling at least one operating mode. The communication unit preferably comprises several operating modes, but it is also possible that the communication unit only comprises one operating mode. The enabling/ disabling unit of the communication unit is designed such that at least one operating mode is temporarily disabled for the user of the mobile communication system. This means that the user is not able to enable the operating mode on its own. If this is the case the user can still keep the mobile communication unit while entering an area where one of the operating modes of the mobile communication unit is prohibited. Due to the fact that the enabling/disabling unit is designed in such a way that the operating mode cannot be enabled by the user alone, the supervising authority of the area can make sure that the user does not use the operating mode illegally. The user does not have to deposit the mobile communication unit at the supervising authority before entering a restricted area.

According to one embodiment of the invention the enabling/disabling unit is designed in such way, that the operating modes or operating mode cannot be enabled by the user for a predetermined amount of time. In the case the predetermined amount of time has run out the user of the communication unit may be able to reactivate the operating mode which was not the case before.

According to another embodiment of the invention the enabling/ disabling unit may be designed in such a way that the operating mode cannot be enabled by the user within a predetermined area. To this end the mobile communication unit may comprise a position determination unit for determining the actual position of the communication unit. This position can then be transmitted to the supervising authority which, based on the position of the communication unit, can determine whether an operating mode has to stay disabled or not. When it is detected that the mobile communication unit has left said predetermined area, the operation mode which was disabled within the area is enabled again. Furthermore, it is possible that the supervising authority is re-enabling the operating mode which was disabled within the area, when the person carrying the communication unit is leaving the area.

Preferably, the mobile communication unit further comprises a command receiving unit for receiving an enabling/ disabling command from an external communication unit, wherein, when the communication unit receives a disabling command from the external communication unit, the enabling/disabling unit disables the operating mode in such a way that said operating mode is temporarily disabled for the user of the mobile communication unit, i.e. cannot be enabled by the user of the communication unit. It should be possible to transmit a disabling command to the mobile communication unit, the mobile communication unit following the command and disabling the operating mode. The information which operating mode should be disabled may be comprised in the command. In this embodiment the enabling/disabling status of the communication unit is controlled by the external communication unit. The external communication unit is supervising the operating modes of the mobile communication unit.

When the communication unit (the enabling/ disabling unit) has disabled the operating mode, the supervising authority has to be sure that the command to disable the predetermined operating mode was followed. To this end the mobile communication unit may further comprise a disabling confirmation unit which confirms the disabling status of the operation mode to be disabled. This confirmation is then transmitted to the external communication unit (also called checkpoint). When the disabling confirmation is received it was made sure that the operating mode was disabled so that the user is not able to enable the operating mode by himself.

Before determining which operating mode has to be disabled, the enabling/disabling status of the operating mode or the operating modes has to be determined. To this end the mobile communication unit may further comprise an operating mode status acquiring unit for acquiring the enabling/ disabling status of the operating mode or operating modes. The enabling/disabling status can then be transmitted to the checkpoint which, based on the received enabling/disabling status determines which of the operating modes has to be disabled before the user of the mobile communication unit is allowed to enter a restricted area.

In the present context it has to be made sure that the user cannot enable the operating mode which was disabled before. After disabling an operating mode it has to be assured that it can be enabled again. The enabling after the disabling can be done in the following way. Preferably, the mobile communication unit comprises a storage unit in which a first portion of an enabling code is stored which is used for re-enabling a disabled operating mode. However, the first part or first portion of the enabling code is not sufficient for enabling again a disabled operating mode. Preferably, a second part or second portion of an enabling code is stored in a second location distinct from the first location. As will be explained in detail later on the second part of the enabling code may be stored at the supervising authority or at the checkpoint supervising the disabling status of the mobile communication unit. Only when the two parts fit together the disabled operating mode can be enabled again.

According to a preferred embodiment the mobile communication unit may have one of the following operating modes: A first operating mode may be a photo operating mode in which the communication unit takes pictures. A second operating mode may be a video operating mode in which the communication unit is recording video data. Another operating mode may be a data recording mode in which the communication unit records speech data or any other data. Another possible operating mode may be a media data reproducing mode, in which, by way of example, a player reproduces music files. Furthermore, the mobile communication unit may have a noise generating mode and a silent mode. In the noise generating mode a communication unit is allowed to generate noise such as a ring tone. When the noise generating mode is disabled, the making of sound of the communication unit is disabled. The enabling/ disabling unit can enable or disable each of the different operating modes or a group of operating modes.

Additionally, the communication unit may comprise an encrypting/ decrypting unit for encrypting or decrypting data received from the outside or sent to the outside. The encrypting/decrypting unit can be used for the communication between the mobile communication unit and the supervising authority or checkpoint supervising the disabling status of the communication unit. The encrypting of information may help to ensure that only the mobile communication unit and the supervising checkpoint can understand the exchanged data. Another third party is not able to follow the communication so that this third unit cannot be used to change the enabling/ disabling status of the mobile communication unit.

The mobile communication unit may be a cellular phone, a PDA or any other electronic device. Furthermore, the communication unit may also be a player for playing audio or video files and for recording them. Additionally, vehicles are known in which photo or video cameras are incorporated for recording the driving route. It is also possible that a supervising authority does not wish the vehicle to enter a predetermined area when the photo or video cameras are enabled. As a consequence, the mobile communication unit may also be a vehicle or part of a vehicle in which the predetermined operating mode is disabled by the checkpoint or supervising authority.

The mobile communication unit may also comprise a protection unit which prevents the manipulation of the look-up table or of the enabling code stored in the storage unit of the mobile communication unit. The protection unit can further prevent the manipulation of the disabled operating modes. The protection unit may comprise mechanical or electrical protections which can assure that disabled operating modes stay disabled and that enabled operating modes to be disabled will be actually disabled. By way of example, the protection unit may provide a key for enabling/ disabling the software modules which are necessary for the functioning of the different operating modes.

In the prior art methods for enabling or disabling software modules depending on a key which, in the present case, may be provided by the protection unit are known. The protection unit may, depending on the disabling or enabling status of the different operating modes, lock or unlock the keys which are necessary for the different operating modes. A "patching" of the software module can be prevented by using the keys. These keys do not depend on the enabling/disabling code of the mobile communication unit which is used for enabling the operating modes by the checkpoint. This protection unit may be designed as an integrated chip, what would make a manipulation by the user difficult.

According to another embodiment of the invention, the mobile communication unit can comprise, e.g., a digital signature with which the mobile communication unit can be certified as a mobile communication unit in which the checkpoint can trust. The information provided in the checkpoint that predetermined mobile communication units are classified as being trustworthy, i.e. the information which mobile communication unit is trustworthy or not, can be provided in a database, to which the checkpoint has access. The checkpoint can be part of a network where the centralized information of the trustworthy mobile communication units is provided. Optionally the checkpoint recognizes a mobile communication unit when the mobile communication unit re-enters the restricted area. Furthermore, the checkpoint can itself classify the mobile communication unit as being trustworthy, once the enabling/disabling status of the operating modes has been checked.

The invention further relates to a checkpoint for controlling the operating mode of the mobile communication unit, the checkpoint comprising a status extracting unit generating an inquiry for the mobile communication unit with which the enabling/ disabling status of the operating mode or operating modes of the mobile communication unit is inquired. The checkpoint has to be able to check the enabling/disabling status of the mobile communication unit in order to decide whether the communication unit maybe used in an area controlled by the checkpoint. Furthermore, the checkpoint may comprise a lookup table containing at least the operating mode or operating modes to be disabled in the mobile communication unit. Furthermore, a comparison unit may be provided for comparing the enabling/ disabling status received from the mobile communication unit to the disabling status comprised in the lookup table. The comparison unit compares the disabled operating modes as received from the mobile communication unit to the operating modes to be disabled as stored in the lookup table. Furthermore, a command generating unit may be provided generating a disabling command for the mobile communication unit when the enabling/disabling status of the communication unit is not in accordance with the disabling status of the lookup table. The checkpoint has to determine which of the operating modes has to be disabled at the communication unit before the communication unit can be taken along in the restricted area which is under the control of the checkpoint.

It should be understood that the restricted area may be a restricted geographical area such as a theatre, a research and development part of a company, an airplane, in which the use of mobile phones may be prohibited, etc.

For exchanging data with the mobile communication unit the checkpoint may further comprise an interface for the data exchange with the mobile communication unit. The communication between the checkpoint and the communication unit may be done by using wireless communication technologies, such as infrared, blue tooth, telecommunication networks and serviced provided by the telecommunication network such as short message services. Furthermore, it is also possible to use a wired connection between the checkpoint and the mobile communication unit for data exchange.

The checkpoint may further comprise a storage unit for storing at least a second part, i.e. the second portion of the enabling code for enabling an operating mode of the mobile communication unit which has been disabled before. This second part of the enabling code has to be used in combination with the first part of the enabling code stored in the communication unit for enabling the operating mode. The storing of the second part of the enabling code in another location than in the mobile communication unit itself helps to prevent the user of enabling the operating mode by himself. Preferably, the enabling codes are stored in the checkpoint in an encrypted way.

The communication unit, according to one embodiment, comprises an encrypting/ decrypting unit for encrypting/ decrypting data sent to the outside or received from the outside. As a consequence also the checkpoint may comprise an encrypting/ decrypting unit for a secured data exchange. Due to the encrypting/decrypting unit of the mobile communication unit and the encrypting/decrypting unit of the checkpoint the two systems are able to determine a communication protocol in such a way that a third party is not able to extract the transmitted information. This helps to avoid that a third party can access information which could be helpful for changing the operating modes of the mobile communication unit.

The invention further relates to a method for controlling the operating mode of the mobile communication unit, the method comprising the following steps: In a first step the disabling/enabling status of the operating mode or operating modes of the mobile communication unit is extracted. Then the disabling/enabling status of the operating modes is transmitted to the checkpoint, so that the checkpoint can then compare the enabling/disabling status of the operating mode or operating modes of the first communication unit to the disabling status of a lookup table, in which a predetermined disabling status of different operating modes is contained. According to this aspect of the invention the disabling status of the operating mode is transmitted to another system (checkpoint), so that this checkpoint is then able to take the appropriate measures. The checkpoint can then react in different ways.

According to one embodiment of the invention the user of the checkpoint can be informed if during the comparison one comes to the result that the enabling/ disabling status extracted from the mobile communication unit is not in correspondence with the disabling status stored in the lookup table. In this embodiment the checkpoint does not actively change the operating mode but only informs the user of the checkpoint such as a security person, that the user of the mobile communication unit uses an operating mode which is not disabled as necessary for entering a restricted area.

Another embodiment is that the checkpoint reacts to the comparison and actively changes the operating mode or operating modes of the mobile communication unit which is or which are not in accordance with the predetermined disabling status stored in the lookup table. When the operating mode was disabled, only the communication unit and the checkpoint together can enable or disable the operating mode again. It should be understood that the checkpoint disabling the operating mode needs not to be the same physical unit as the checkpoint used for enabling the operating mode again after leaving the restricted area. By way of example, there may be several checkpoints which communicate with one another and which share information needed to enable again an operating mode of the mobile communication unit. If the user of the mobile communication unit leaves the restricted area in another location, he or she should be able to enable the operation mode by communicating with a checkpoint located at the exit of the restricted area.

The method may preferably further comprise the steps of retrieving the disabled operating modes of the mobile communication unit or retrieving all possible operating modes of the mobile communication unit. A list of disabled operating modes or of all operating modes is then transmitted to the checkpoint, the checkpoint is then checking whether the disabled operating modes contained in the lookup table are also marked as disabled in the list transmitted from the mobile communication unit. By comparing the list to the lockup table the operating mode of the mobile communication unit can be determined which is not in accordance with the predetermined disabling status stored in the lookup table.

When the checkpoint disables the operating mode which has to be disabled for entering the restricted area the checkpoint furthermore may enable the different operating modes of the mobile communication unit which have been disabled by the checkpoint before by sending an enabling command to the mobile communication unit. This enabling command may comprise the second portion of the enabling code for enabling the operating mode. In the mobile communication unit the two parts of the code are combined, so that the operating mode can be enabled again.

For security reasons it is also possible that the operating modes which have been disabled by the checkpoint are automatically enabled after a predetermined amount of time. First of all, it is possible that the checkpoint and the user of the mobile communication unit come to the agreement that a certain amount of time, e.g. two or three hours are surely enough, so that the operating mode is disabled for said amount of time. Additionally, it is possible that, when the operating mode should have been enabled by the checkpoint, and the enabling did not work, it has to be assured, that after a predetermined amount of time, e.g. one day, the operating mode is enabled again without the use of the checkpoint. The user of the mobile communication unit should be able to reuse all operating modes of the mobile communication unit in order not to unduly restrict the user in the use of the mobile communication unit.

As mentioned above, the checkpoint transmits the second part of the enabling code to the mobile communication unit, the mobile communication unit using the first part and the second part for re-enabling the operating modes which were disabled by the checkpoint.

The decision whether the operating mode is enabled again can also be based on the fact whether the user and his mobile communication unit is still inside the restricted are. If it is detected that the user is still inside the geographical area, the operating mode is left disabled. When the user leaves the restricted area or predetermined geographical area the operating mode of the mobile communication unit is enabled. For deciding whether the user has left the restricted are, electronic systems or position determining units can be used. However, it is also possible to use supervising personal for determining the location of the mobile communication unit.

According to one aspect of the invention the user of the mobile communication unit has to be informed and has to agree when certain operating modes of the mobile communication unit should be disabled. To this end, any of the following steps may be used: First of all, the user of the mobile communication unit identifies himself to the mobile communication unit, i.e. the user is authenticated. In another step the checkpoint is authenticated to the mobile communication unit, so that the mobile communication unit knows the authority which is used for exchanging the necessary information. Additionally, the operating modes of the mobile communication unit and the respective enabling/ disabling status are determined in the mobile communication unit. The enabling/disabling status of the operating modes may then be transmitted to the checkpoint. The mobile communication unit may then request the list of operating modes to be disabled, if any. When the operating modes to be disabled are known, the user of the mobile communication unit and the checkpoint have to come to an agreement about the way of disabling the operating modes and about which operating modes are to be disabled. If the user agrees to the operating modes to be disabled, he or she confirms the disabling status of the mobile communication unit, the confirmation being transmitted to the checkpoint. In order to assure that the disabled operating mode can be enabled again, an enabling code or part of an enabling code is stored on the mobile communication unit, another part being stored on the checkpoint. Last but not least the disabling of the operating modes or operating mode is confirmed to the checkpoint, so that the checkpoint knows which operating modes were disabled.

The invention further relates to a security system comprising a mobile communication unit and a checkpoint as mentioned above.

### BRIEF DESCRIPTION OF THE DRAWINGS

In the following preferred embodiments of the invention are described by referring to the accompanying drawings, in which:
- Fig. 1: shows a system for controlling the operating mode of a mobile communication unit,
- Fig. 2: shows a lookup table stored in the checkpoint for determining the operating modes to be disabled at the mobile communication unit,
- Fig. 3: shows a flow chart for controlling the disabling status in a first embodiment,
- Fig. 4: shows a flow chart with another embodiment for disabling an operating mode, and
- Fig. 5: shows a flow chart for the communication between the communication unit and the checkpoint.

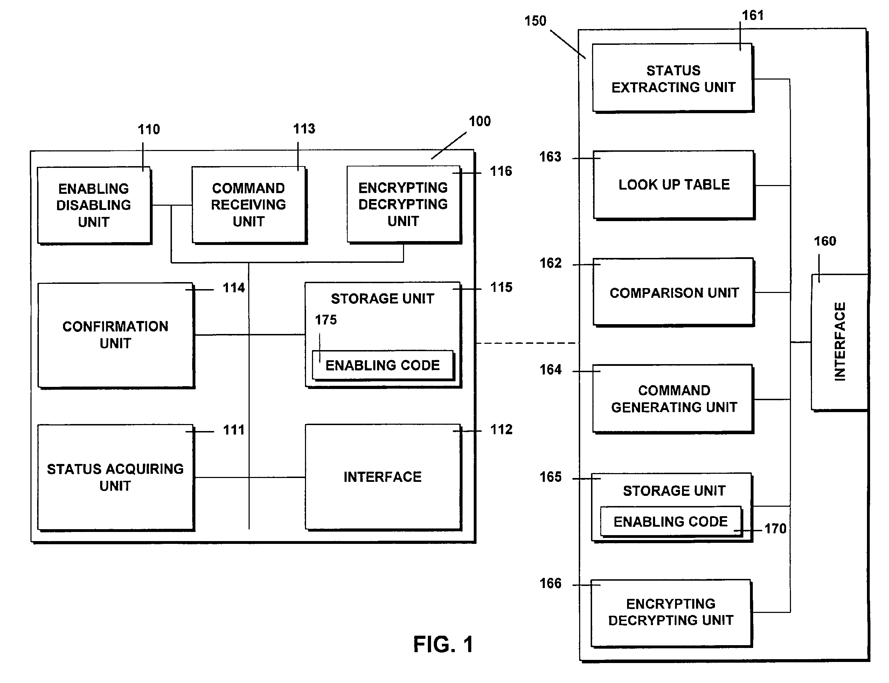

In Fig. 1 a system for controlling the operating mode of a mobile communication unit is shown. In Fig. 1 a user having a mobile communication unit 100 wants to enter a restricted are, in which the use of some operating modes of the communication unit 100 may be prohibited. To this end, a checkpoint 150 is provided supervising the access to the restricted area. The restricted are may be a part of a company, where part of the premises could comprise confidential information. In this area the user of a mobile phone having a photo or video operating mode may not be admitted. In this case the user would have to leave the mobile communication unit 100 at the entrance before entering the are.

The mobile communication unit may have several operating modes, by way of example, a telecommunication operating mode, a photo operating mode, a video operating mode and/or any data recording mode. When the user wants to take along the communication unit 100 the operating modes not permitted in the restricted area have to be disabled. To this end, the communication unit 100 comprises an enabling/disabling unit 110 which allows the enabling or disabling of different operating modes. Normally the status of the different operating modes is not known for a third person controlling the communication unit 100 or for the checkpoint 150. For acquiring the enabling/disabling status of the communication unit the latter comprises a status acquiring unit 111 which collects the enabling or disabling status of the different features of the communication unit.

When the checkpoint 150 has to control the enabling or disabling status of the communication unit, the checkpoint has to receive the enabling/disabling status information from the mobile communication unit. The mobile communication unit comprises an interface 112 for the data exchange with the checkpoint 150. The interface should be able to handle different communication technologies, be it wireless communication technologies or wired communication technologies. By way of example, the information exchange can be made using the blue tooth technology or the infrared technology. It should be understood that any other way of communicating between the unit 100 and the checkpoint 150 is possible.

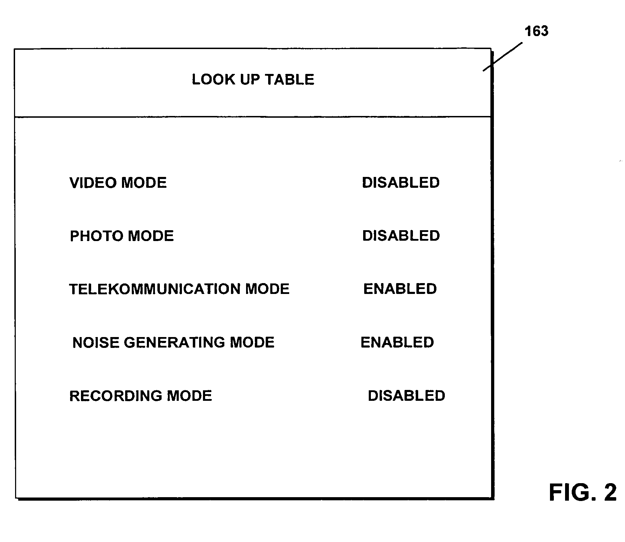

When the status acquiring unit has acquired the disabling status of the mobile communication unit it is sent to the checkpoint via interface 112 where it is received with interface 160. When the enabling/ disabling status is received by the checkpoint 150 a status extracting unit 161 extracts the disabling status of the different operating modes of the mobile communication unit 100. A comparison unit 162 compares the enabling/disabling status of the mobile communication unit to a disabling status stored in a lookup table 163. As will be explained in detail with reference to Fig. 2 the lookup table comprises at least the operation mode which should be disabled when entering the restricted area. The comparison unit 162 checks whether the operating modes which are to be disabled according to the lookup table 163 are also disabled in the mobile communication unit 100. If one of the operating modes which have to be disabled before entering the restricted area is still enabled in the mobile communication unit, the latter has to be informed by the checkpoint which operating modes have to be disabled. To this end, a command generating unit 164 is provided for generating a command for the mobile communication unit 100. The command comprises the information which operating mode is to be disabled in the mobile communication unit. This command is then sent to the mobile communication unit and processed by a command receiving unit 113 of the mobile communication unit. The command receiving unit extracts the information which of the operating modes is to be disabled and transfers information to the enabling/ disabling unit 110.

However, the user of the mobile communication unit should be informed of the changes of the operating modes initiated by the checkpoint. By way of example, the information of a status change may be displayed on a display (not shown) and the user has to confirm the changing operating mode using a confirmation unit 114.

As will be discussed in detail later on the user of the communication unit 100 cannot enable the disabled operating mode on his own. In order to do so information from the checkpoint 150 has to be provided. The enabling/disabling unit 110 can work in different ways. In a first embodiment the enabling/disabling unit can disable predetermined operating modes for a predetermined amount of time. The re-enabling can either be done automatically after a time-out or the re-enabling can be done using an exchange protocol between the mobile communication unit 100 and the checkpoint 150. The enabling/disabling unit can disable specific operating modes or can also disable predetermined functional blocks of the operating modes, e.g. all multi-media operating modes. The disabling operating mode can be achieved by confirming a message received from the checkpoint 150. In another embodiment the user of the mobile communication unit has to input a disabling code in the enabling/disabling unit for disabling a predetermined operating mode. Additionally, a position determination unit (not shown) may be provided which is determining the geographical position of the mobile communication unit. This geographical position can be transmitted to the checkpoint 150 which then decides whether the communication unit is still located within the restricted area or whether the communication unit has already left the restricted area.

Once an operating mode has been disabled upon approval by the user, the user cannot enable the disabled operating mode by himself. If the operating mode was disabled for a predetermined amount of time, the operating mode may be enabled automatically after the time has lapsed. If the user wants to enable the disabled operating mode again before or in the other cases the communication unit 100 has to communicate with the checkpoint 150. The checkpoint 150 comprises a storage unit 165, where part of an enabling code 170 is stored. This first portion of the enabling code 170 has to be combined with the second portion of the enabling code 175 stored in a storage unit 115 of the mobile communication unit. When the confirmation unit 114 confirms the disabling of an operating mode, the enabling code which was sent from the checkpoint 150 can be stored in the storage unit. Only when the first portion of the enabling code 175 and the second portion of the enabling code 170 provided in the checkpoint 150 are combined, the disabled operating mode can be enabled again. When the user leaves the restricted area the enabling code 170 can be transferred to the mobile communication unit 100. It is also possible that the re-enabling information of the checkpoint is transmitted to the mobile communication unit via a telecommunication network. This may help if the user of the mobile communication unit has forgotten to re-enable the operating mode after leaving the restricted area. The user can then contact the supervising authority or the checkpoint 150, and the checkpoint will transmit the needed portion of the enabling code 170.

In the other cases the data exchange can be done using known wired or wireless exchange techniques such as bluetooth, etc.

In general, it has to be avoided that a third party is able to disable or enable an operating mode of the communication unit without the approval of its user. The checkpoint 150 has to authenticate itself to the mobile communication unit. Then the user of the communication unit has to confirm that the checkpoint or supervision authority and the communication unit start a disabling dialogue In order to ensure that the data exchange between the two units and the transmitted information cannot be investigated by third parties an encrypting/decrypting unit 116 is provided in the mobile communication unit, another encrypting/decrypting unit 166 being provided in the checkpoint. The two encrypting/decrypting units help to assure that once the communication line between the two units has been established, a third party cannot access the mobile communication unit and change the status of the enabling/disabling modes.

In Fig. 2 a schematic view of a lookup table 163 is shown in further detail. In the lookup table the supervising authority can determine which of the operating modes have to be disabled when a user wants to enter the restricted area. In the embodiment shown the lookup table is configured in such a way that all the multi-media operation modes and a voice recording mode have to be disabled when the user wants to enter the restricted area with the mobile communication unit. In the embodiment shown the user can use the cellular phone but cannot use the phone for taking pictures. It should be understood that the operating modes to be disabled depend on the area. If the area is an airplane or is a theatre, the operating company may not wish that the telecommunication mode is working or that the ring tone is audible. In this case the telecommunication mode and the noise generating mode would be disabled. Summarizing, the entries of the lookup table determine which operating modes have to be disabled when the user wants to enter the restricted area.

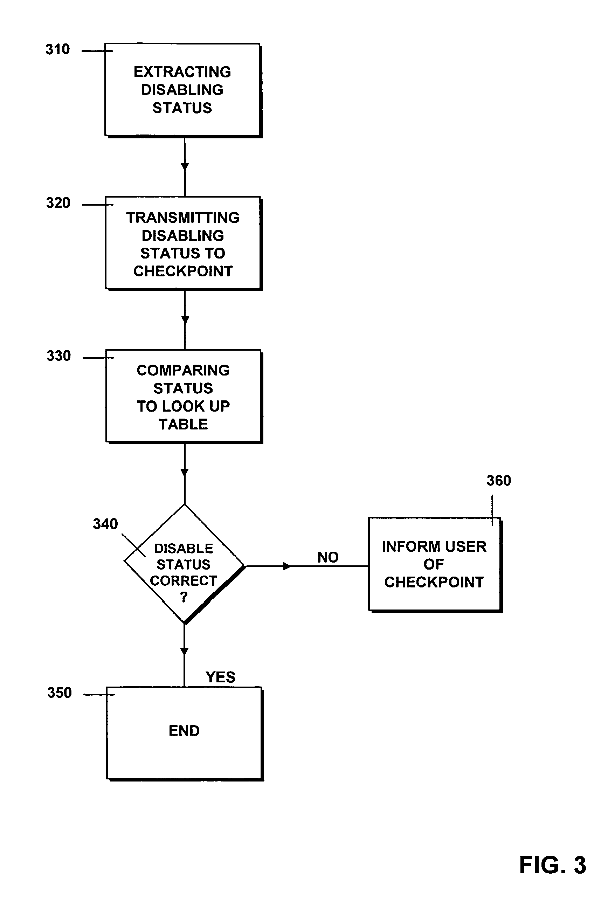

In Fig. 3 the different steps for controlling the operating modes of a mobile communication unit are shown. A first step 310 disabling or enabling status of the operating modes is extracted in the mobile communication unit 100. This enabling/disabling status is then transmitted to the checkpoint in step 320. In the checkpoint 150 the extracted enabling/disabling status is then compared to the entries of the lookup table 163 (step 330). In the next step 340 it is asked whether the disabling status of the mobile communication unit 100 is in accordance with the disabling status stored in the lookup table (step 340). If the operating modes to be disabled are already disabled in the mobile communication unit 100, the user can enter the restricted area. In this case the controlling ends in step 350. Optionally, the user of the checkpoint can also be informed that the disabling status of the mobile communication unit is correct. If the disabling status of the mobile communication unit does not correspond to the predetermined disabling status of the lookup table, the user of the checkpoint 150 may be informed (step 360). The user of the checkpoint can inform the user of the mobile communication unit to disable the operating mode or can prompt the user of the communication unit to leave the communication unit at the checkpoint before entering the restricted area.

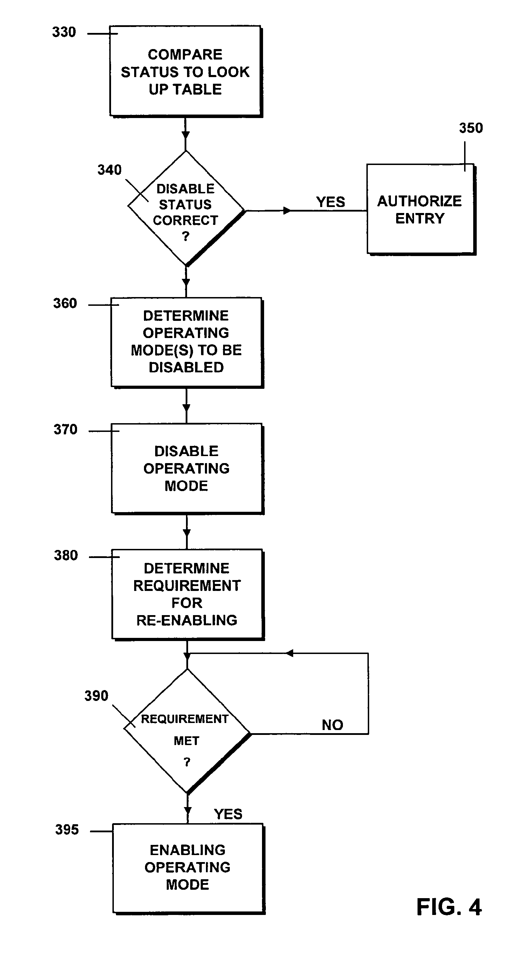

In Fig. 4 another embodiment is shown in which the checkpoint actively controls the enabling/ disabling status of the mobile communication unit. As already discussed in connection with Fig. 3 the status of the communication unit is compared to the lookup table in step 330. In a next step it is checked whether the disabling status of the communication unit is correct (step 340). If this is the case the entry into the restricted area is authorized in step 350.

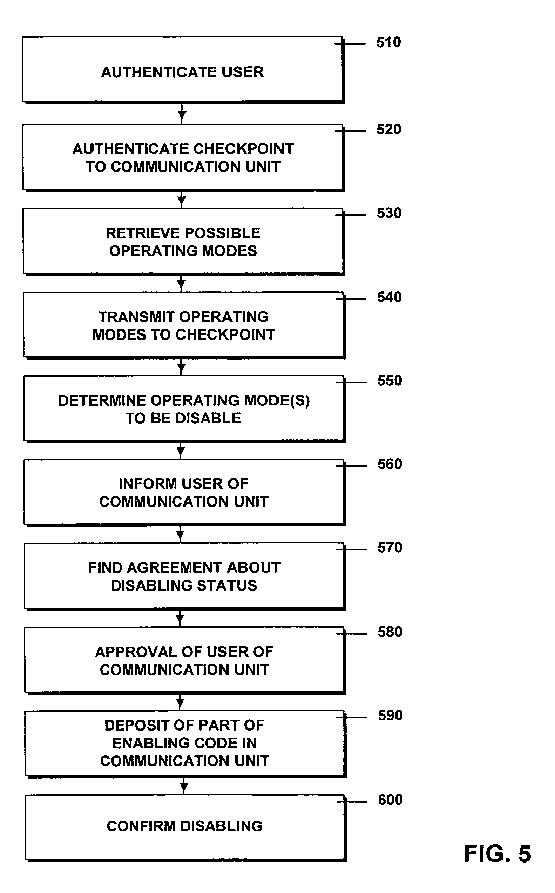

If the disabling status does not coincide with the disabling status of the lookup table the operating modes are determined by the checkpoint which have to be disabled at the mobile communication unit (step 360). In a next step the operation mode is disabled (step 370). As will be discussed in connection with Fig. 5 the agreement of the user may be needed to disable the operating mode of the mobile communication unit. Furthermore, when the operating mode is disabled it is determined at the same time how the operating mode can be enabled again (step 380). The checkpoint and the user of the mobile communication unit have to come to an agreement how the operating mode which was disabled can be enabled again. The re-enabling can take place either automatically after a time-out or the communication unit 100 and the checkpoint 150 have to exchange an enabling information. This enabling information can either depend on the geographical position of the communication unit, i.e. when the user has left the restricted area the position is transferred to the checkpoint which then sends an enabling command. Furthermore, the re-enabling can be possible when the user passes a checkpoint when leaving the restricted area. In this case an enabling command can be sent to the communication unit.

In the next step 390 it is then asked whether the enabling requirement which was determined in the step above is met or not (step 390). If not, the system will wait until the requirement is met in connection with the above mentioned examples. This means, that either the user has left the predetermined area, the time limit has run out or the user has passed the checkpoint at the exit of the area where a data exchange of the enabling code re-enabled the disabled operating mode. If the requirement is met the operating mode is enabled again (step 395). The embodiment of Fig. 4 shows a case, in which the checkpoint actively controls the operating modes of the communication unit which was not the case in the embodiment shown in Fig. 3, where the supervising authority was only informed of the disabling status.

In Fig. 5 the communication protocol between the checkpoint and the communication unit is shown in further detail. The steps shown in Fig. 5 could be used for disabling and re-enabling an operating mode or several operating modes of the communication unit. In a first step the user has to be authenticated for the communication unit. It has to be assured that the right user starts the disabling procedure of the communication unit. In a next step 520 the checkpoint has to be authenticated. The communication unit 100 has to identify the supervising authority in order to know which system is going to transmit the disabling command. It has to be made sure that not any communication unit is able to actively control the operating modes of the communication unit. Optionally, the user is also authenticated to the checkpoint.

In the next step 530 the possible operating modes are retrieved from the communication unit in step 530. In this step the operating modes of the communication unit and the respective enabling/disabling status has to be determined. In step 540 the retrieved information is transmitted to the checkpoint and in a next step 550 the operating modes are determined which are to be disabled before entering the restricted area. As mentioned above the operating modes to be disabled are determined by comparing the disabling status of the communication unit to the disabling status stored in the lookup table. After determining the operating modes to be disabled the user of the communication unit is informed of the upcoming changes of the operating modes (step 560). In the next step 570 the user of the communication unit and the checkpoint have to finally agree on the disabling status and on the fact how the operating mode is to be disabled. So before the operation mode is disabled, the user of the communication unit has to approve the change in the disabling status (step 580). This helps to avoid that the functioning of the communication unit is not changed without the permission of the user. When the user has approved the disabling of one or several of the operating modes the communication unit transmits part of the enabling code to the communication unit, where it is stored in a storage unit 115. The other part of the enabling code is located in another location, preferably at the checkpoint 150. After the deposit of the enabling code in step 590 the disabling status of the operation mode of the communication unit is confirmed at the checkpoint (step 600). The re-enabling of the operating mode was already described in connection with Fig. 4.

Summarizing the present invention provides a possibility for an end user to take along a communication unit having different operating modes to a restricted area, where some of the operating modes may not be allowed. The present invention can be used in several different embodiments. By way of example, the operating modes can be controlled when the user wants to enter a research department or when the user wants to enter a public swimming bath, where the visitors should not be able to take photos. Another area where the present invention could be used is a theatre, cinema, or any other events, where some of the operating modes of the communication unit could be disturbing.

## Claims

1. Mobile communication unit (100) having at least one operating mode comprising an enabling/ disabling unit (110) for enabling/ disabling at least one operating mode, whereas the enabling/disabling unit (110) is designed in such a way that at least one operating mode is temporarily disabled for the user of the mobile communication system.

2. Mobile communication unit (100) according to claim 1, **characterized in that** the enabling/ disabling unit (110) is designed in such a way that at least one operating mode can not be enabled by the user for a predetermined amount of time.

3. Mobile communication unit (100) according to claim 1 or 2, **characterized in that** the enabling/ disabling unit (110) is designed in such a way that at least one operating mode can not be enabled by the user within a predetermined area.

4. Mobile communication unit (100) according to any of the preceding claims, **characterized by** further comprising a command receiving unit (113) for receiving an enabling/disabling command from an external communication unit (150), wherein, when the mobile communication unit (100) receives a disabling command from the external communication unit (150), the enabling/disabling unit (110) disables the operating mode in such a way that said operating mode can not be enabled by the user of the mobile communication unit.

5. Mobile communication unit (100) according to any of the preceding claims, **characterized by** further comprising a disabling confirmation unit (114) which confirms a disabling status of at least one operating mode of the communication unit.

6. Mobile communication unit (100) according to any of the preceding claims, **characterized by** further comprising an operating mode status acquiring unit (111) for acquiring the enabling/disabling status of said at least one operating mode.

7. Mobile communication unit (100) according to any of the preceding claims, **characterized by** further comprising a storage unit (115) for storing at least a first part (175) of an enabling code used for re-enabling a disabled operating mode.

8. Mobile communication unit (100) according to any of the preceding claims, **characterized in that** the operating mode of the communication unit comprises at least one of the following operating modes: a photo operating mode, a video operating mode, a data recording operating mode, a media data reproducing mode, a noise generating mode.

9. Mobile communication unit (100) according to any of the preceding claims, **characterized by** further comprising encrypting/decrypting unit (116) for encrypting/ decrypting data received from the outside or sent to the outside.

10. Checkpoint (150) for controlling the operating mode of a mobile communication unit, comprising :
- a status extracting unit (161) generating an inquiry for a mobile communication unit (100), with which the enabling/disabling status of at least one operating mode of the mobile communication unit is inquired,
- a look up table (163) containing at least the operating modes to be disabled,
- a comparison unit (162) for comparing the enabling/disabling status received from the mobile communication unit to the disabling status comprised in the look up table (163), and
- a command generating unit (164) for generating a disabling command for the mobile communication unit when the enabling/disabling status of the communication unit comprises the information that one operating mode to be disabled is enabled at the mobile communication unit.

11. Checkpoint (150) according to claim 10, **characterized by** further comprising an interface (160) for data exchange with a mobile communication unit.

12. Checkpoint (150) according to claim 10 or 11, **characterized by** further comprising a storage unit (165) for storing at least a second part (170) of an enabling code for enabling an operating mode of the mobile communication unit.

13. Checkpoint according to any of claims 10 to 12, **characterized by** further comprising an encrypting/decrypting unit (166) for encrypting/decrypting data received from the outside or sent to the outside.

14. Method for controlling the operating mode of a mobile communication unit (100), the communication unit comprising at least one operating mode, the method comprising the following steps:
- extracting the disabling/ enabling status of said at least one operating mode of the mobile communication unit,
- transmitting the disabling/enabling status of the different operating modes to a checkpoint (150),
- comparing, by the checkpoint, the enabling/disabling status of said at least one operating mode of the mobile communication unit to a look up table (163) in which a predetermined disabling status of said different operating modes is contained.

15. Method according to claim 14, **characterized by** further comprising the step of informing the user of the checkpoint (150) if the enabling/disabling status extracted from the mobile communication unit is not in correspondence to the disabling status stored in the look-up table.

16. Method according to claim 14 or 15, wherein the checkpoint (150) changes the operating mode of the mobile communication unit which are not in accordance with the predetermined disabling status of the look up table.

17. Method according to claim 16, further comprising the steps of
- retrieving the disabled operating modes of the mobile communication unit,
- transmitting a list of disabled operating modes to the checkpoint,
- checking, by the checkpoint, whether the disabled operating modes contained in the look up table are also marked as disabled in the list transmitted from the mobile communication unit, and,
- determining the operating mode of the mobile communication unit (100) which is not in accordance with the predetermined disabling status of the look-up table (163).

18. Method according to any of claims 14 to 17, wherein the checkpoint (150) enables the different operating modes of the mobile communication unit (100) which have been disabled by the checkpoint, by sending an enabling command to the first communication unit.

19. Method according to claim 18, wherein the operating modes which have been disabled by the checkpoint (150) are automatically enabled after a predetermined amount of time.

20. Method according to claim 18 or 19, wherein the checkpoint (150) transmits a second part (170) of an enabling code to the mobile communication unit (100), the mobile communication unit using a first part (175) of an enabling code stored in the mobile communication unit together with the second part (170) for re-enabling the operating mode which was disabled by the checkpoint.

21. Method according to any of claims 14 to 20, further comprising the step of determining whether the mobile communication unit is located within a predetermined geographical area, and if the mobile communication unit has left said predetermined geographical area, enabling the operating modes of the mobile communication unit, which have been disabled before.

22. Method according to any of the preceding claims, further comprising at least one of the following steps:
- authenticating the user of the mobile communication unit (100),
- authenticating the checkpoint unit (150) to the mobile communication unit,
- determining the operating modes of the mobile communication unit and the respective enabling/ disabling status,
- transmitting the enabling/disabling status of the operating modes to the checkpoint,
- requesting, by the mobile communication unit, the list of operating modes to be disabled,
- coming to a mutual agreement about the way of disabling the operating modes,
- confirming the disabling status by the user of the mobile communication unit,
- depositing an enabling code on the mobile communication unit and on the checkpoint,
- confirming the disabling of operating functionalities to the checkpoint.

23. Method according to any of claim 14 to 22, wherein the mobile communication unit and the checkpoint use encryption techniques during data exchange.

24. Method according to any of claims 14 to 23, wherein the checkpoint transmits the enabling command to the mobile communication unit via a telecommunication network.

25. Security system comprising a mobile communication unit of any of claims 1 to 9 and a checkpoint as mentioned in any of claims 10 to 13.
